(19) Europäisches Patentamt

European Patent Office

Office européen des brevets

(11) EP 1 479 715 A1

(12) EUROPEAN PATENT APPLICATION

(43) Date of publication:
24.11.2004 Bulletin 2004/48

(51) Int Cl.7: C08J 5/18, B32B 27/20, B32B 31/00, B41M 5/00

(21) Application number: 03076460.9

(22) Date of filing: 15.05.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(71) Applicant: Fuji Photo Film B.V.
5047 TK Tilburg (NL)

(72) Inventors:
• DE VRIES, Ieke Gerke
  5171 WV Kaatsheuvel (NL)

• MORI, Fuyuhiko
  418-0044 Fujinomiya (JP)

(74) Representative:
Prins, Adrianus Willem, Mr. Ir. et al
Vereenigde,
Nieuwe Parklaan 97
2587 BN Den Haag (NL)

(54) Microporous film

(57) The present invention relates to a recording medium, in particular an ink-jet recording medium of photographic quality that has excellent ink absorption speed, good drying characteristics and a good image printing quality. According to the present invention an ink-jet recording medium as provided, comprising a support to which a (micro-)porous water swellable layer is adhered. The present invention is further directed to methods for obtaining such a medium.

EP 1 479 715 A1

**Description**

**Field of invention**

The present invention relates generally to a microporous film, in particular a microporous film, which can be used in an ink-jet recording medium of photographic quality that has excellent ink absorption speed, good drying characteristics and a good image printing quality.

**Background of the invention**

Microporous materials comprising thermoplastic organic polymer, large proportions of filler particles, and large void volumes are known and have many valuable properties. Such microporous materials are durable and many of them are particularly useful as printing substrates, which can be used for example in ink jet printing applications.

In a typical ink-jet recording or printing system, ink droplets are ejected from a nozzle at high speed towards a recording element or medium to produce an image on the medium. The ink droplets, or recording liquid, generally comprise a recording agent, such as a dye, and a relatively large amount of solvent in order to prevent clogging of the nozzle. The solvent, or carrier liquid, typically is made up of water, and organic material such as monohydric alcohols and the like. An image recorded as liquid droplets requires a receptor on which the recording liquid dries quickly without running or spreading. High quality image reproduction using ink-jet printing techniques requires receptor substrates, typically sheets of paper or opaque or transparent film, that readily absorb ink droplets while preventing droplet diffusion or migration. Good absorption of ink encourages image drying while minimizing dye migration by which good sharpness of the recorded image is obtained.

There are in general two approaches for producing ink-jet recording media with photographic quality and good drying properties.

One approach for producing ink-jet recording media with photographic quality and good drying properties is the so called "non-microporous film type" as proposed in several patent publications such as EP-A-806 299 and JP-A-22 76 670. For this type of ink-jet recording medium, at least one ink receptive layer is coated on a support such as a paper or a transparent film. The ink receptive layer typically contains various proportions of water swellable binders and fillers. The proportions of these components affect the properties of the coatings, in particular ink absorption properties and the gloss quality appearance of the ink-jet media. This so called swellable type of ink-jet recording media may give less dye fading, but these generally dry more slowly.

Another approach is to provide a substrate with a porous layer, which can act as the ink-receiving layer. However, this known technique may give problems as to the gloss of the paper. In specific embodiment of the known technique of substrates provided with a porous layer, there is provided on top of the porous layer an ink-receiving layer to enhance the gloss. In this microporous type, the microporous film has as the primary function to absorb the ink solvent. The typical microporous film suitable for this purpose is described *inter alia* in US-A-4 833 172, US-A-4 861 644 and US-A-5 326 391.

One of the important properties of an ink-jet receptive coating formulation is the liquid absorptivity. The majority, if not all, of the ink solvent has to be absorbed by the coating layer itself. Only when paper or cloth or cellulose is used as a support, some part of the solvent may be absorbed by the support.

As said before, the microporous film has the primary function to absorb the ink solvent. This so called "microporous film type" is superior in drying time to the non-microporous type especially due to its high absorption speed for the ink-solvent. There are various options to apply a microporous layer onto a substrate. One possibility is to coat a microporous layer directly to a substrate as described in EP-A-0 812 697. Another way is to laminate a hydrophilic microporous sheet to a substrate.

One of the hygroscopic microporous sheets suitable for this purpose is described among others in US-A-4 833 172, US-A-4 861 644 and US-A-5 326 391 and commercially available under the name TESLIN®. The use of this film in ink jet applications gives a very good drying speed, however without top coating the gloss is low. In US-A-5 605 750 and WO-A-99/41086, it is suggested to apply an ink-receiving layer on top of this microporous film in order to increase the colour density, glossiness, etc.

The manufacturing of this TESLIN®. film is not very environmental friendly due to the use of halogenated hydrocarbons. Another disadvantages of the above mentioned microporous film is its thickness, which commercially is minimal 150 μm. This is too much to be readily laminated onto a base paper support commonly used in the photographic industry. The use of this film is therefore economically, technically and environmentally not preferred.

There are a lot of other microporous films, which are significantly thinner (thickness less than 150 μm) and cheaper than the said hydrophilic microporous film. Some examples thereof have been described in WO-A-96/19346, BE-A-1 012 087, EP-A-0 283 200 and US-A-4 350 655. These microporous films are made by melt extrusion of hydrophobic resins comprising a filler giving a ply and stretching the resulting ply uni-axially or bi-axially to give a film.

The amount and the size of the pores are very much dependant on the stretching ratio, the amount, shape and size of the fillers used and the kind of stretching applied. These films are hydrophobic and thus water repellent by nature and have to be made hydrophilic. One method to make a hydrophobic film hydrophilic is by impregnating the film after extrusion, with a hydrophilic substance as described in WO-A-02/053391. Another method is to use a hydrophilic additive during extrusion of the film as described in WO-A-03/016068. When using a high amount of fillers in the melt extrusion formulation, the sheet easily breaks during stretching. In order to prevent this coated pigments have been developed as described WO-A-00/05295. The filler particles, which are usually calcium carbonate that is white and low in price, need to be treated in order to make the filler hydrophobic and to obtain a polymer-loading amount, which is preferably higher than 65 wt.%. An even higher amount of filler is preferable, because after stretching a higher pore volume will result, which will give an improved solvent absorbing property. From an economical point of view it is cheaper to use unmodified filler, but than the web breaks easily at low levels of stretching

There remains therefore a need for having a microporous film that is suitable to be used as an ink solvent absorbing layer for the ink jet media, which is economically attractive using low cost resins and fillers and which is thin enough, has enough void volume, has high ability to absorb the ink solvent. It is towards fulfilling this need that the present invention is directed.

**Summary of the invention**

The object of the present invention is to solve, at least in part, the above-mentioned problems associated with the prior art. In one embodiment, the present invention is directed to a microporous film comprising a multilayer of hydrophobic thermoplastic resins in which at least one of the layers comprises at least one filler in an amount of > 50% and in which at least one of the remaining layers contains at least one filler in the amount of < 50%. In another embodiment of this invention said multilayer of hydrophobic resins is made hydrophilic by either impregnating the resulting sheet with a hydrophilic solvent and drying; or it is made hydrophilic by using a hydrophilic component during melt extrusion of the ply which is consecutively stretched to give a microporous film. In another embodiment of this invention said microporous film is applied on a support to form an ink jet recording medium. In yet another embodiment of this invention said ink jet recording medium is coated with a topcoating to enhance amongst others the gloss. Said recording medium with or without the top coating has advantageous properties in relation to ink absorption speed, wetability characteristics and image printing quality, which makes the media of the present invention particularly suitable for producing images of photographic quality.

In accordance with the present invention, there is provided an ink jet recording medium comprising at least:

a support, and a microporous film adhered to said support, wherein said microporous film is characterised by:

- at least two layers of hydrophobic resin in which one layer comprises at least one filler in an amount > 50 weight% and the other layer comprises at least one filler in an amount < 50 weight%,
- said microporous film having interconnecting channels between the pores, with a void volume between 30 to 80 volume percent of the total microporous film said hydrophobic film being made hydrophilic by impregnating the film as such with a hydrophilic coating or impregnating it when applied to a support. Another way of making the film hydrophilic in by using a hydrophilic component during melt extrusion and subsequent stretching of the extruded ply to give a microporous film; this micro porous film can be made even more hydrophilic by treating said microporous film after and/or before adhering said film onto the support with a hydrophilic coating

Another aspect of this invention is to provide ink jet media comprising a support and a microporous film wherein the microporous film is characterised by a multitude of layers in which the amount of at least one filler is > 50% in one or more layers and in which the amount of at least one filler is < 50% in one or more of the other layers and obtainable by the method of BE-A-1 012 087. Accordingly, another aspect of the present invention is the use of a specific microporous film in ink jet media, which microporous film is obtainable by a method comprising the successive steps of:

- preparing at least one mixture consisting of a polyolefin matrix, containing at least one polymer and at least one mineral and/or organic filler in an amount > 50% and preparing at least one mixture consisting of a polyolefin matrix, containing at least one polymer and at least one mineral and/or organic filler in an amount < 50%; extruding at least both mixtures consecutively or simultaneously into one ply
- pre-stretching the ply with a drag roll;
- cooling and solidifying the pre-stretched ply using the drag roll;
- drawing the solidified ply at sufficient temperature to form the micro-porous film, whereby:

    - the cooling of the pre-stretched melting ply by the drag roll is partial and limited in a controlled manner at a temperature within the range required for its drawing; and

- the drawing of the ply, brought to the required temperature for drawing through partial cooling is carried out by traction at the time of its tangential separation from the drag roll, the said roll acting as take-up roller for drawing.

## Detailed description

The present invention is directed to provide a microporous film comprising a multilayer of hydrophobic thermoplastic resins in which at least one of the layers comprises at least one filler in an amount of > 50% and in which at least one of the remaining layers contains at least one filler in the amount of < 50%. It is another object of this invention that said multilayer of hydrophobic thermoplastic resins is made hydrophilic by either impregnating the microporous film with a hydrophilic solvent and drying or by using a hydrophilic component during melt extrusion of the ply which than is stretched to give the microporous film.

In our research to obtain an ink-jet recording medium with excellent drying properties using hydrophobic microporous membrane which were made hydrophilic we could not increase the drying properties beyond a certain value due the fact, that we could not increase the number of micropores. The method to increase the number of micropores is to use very fine filler grades or to increase the amount of filler in the hydrophobic thermoplastic resin, which is extruded. However if we use more filler than 55 weight% the ply that is formed after melt extrusion breaks at the stretching process before the intended stretch ratio is achieved. It has been described in US-A-5 993 589 that a web break can be prevented by applying a non filled flexible resin like polyurethane to the filled resin layer. Upon stretching this composition the filled matrix cannot break because the flexible resin prevents breaking from happening. Using such a film for an ink jet application does not give the full benefit from using a microporous sheet as the flexible layer will not be penetrated by water.

We have now surprisingly found, that we can increase the amount and volume of micro pores by extruding several layers to form one ply in which at least one of the layers comprising at least one filler in an amount > 50 weight% and at least one layer comprising at least one filler in an amount of < 50 weight%. At the stretching process the resulted ply could be stretched in the same amount as a mono extruded ply with a much lower amount of filler, without breaking. Using this method we can achieve a higher void volume compared to previous method. Using the after stretching said ply obtained microporous film, attached to a support in an ink jet application gives improved drying properties.

In one embodiment of the present invention the recording medium is produced as follows:

- prepare at least one mixture consisting of a polyolefin matrix, containing at least one polymer and at least one mineral and/or organic filler in an amount > 50%;
- prepare at least one mixture consisting of a polyolefin matrix, containing at least one polymer and at least one mineral and/or organic filler in an amount < 50%;
- extruding at least both mixtures consecutively or simultaneously into one ply;
- pre-stretching the ply with a drag roll;
- cooling and solidifying the pre-stretched ply using the drag roll;
- drawing the solidified ply at sufficient temperature to form the micro-porous film, whereby:

  - the cooling of the pre-stretched melting ply by the drag roll is partial and limited in a controlled manner at a temperature within the range required for its drawing; and
  - the drawing of the ply, brought to the required temperature for drawing through partial cooling is carried out by traction at the time of its tangential separation from the drag roll, the said roll acting as take-up roller for drawing.

The resulting microporous film contains voids on the surface and pores inside the film. In the present application no distinction is made between "voids" and "pores". Consequently, the term "pore(s)" as used herein covers both void(s) and pore(s). The same counts for the term "void(s)". Preferably in the microporous film obtained by this method the volume of pores of diameter larger than 100 nm is at least 25 percent by volume of the total pore volume of said microporous film. The total pore volume can be as high as 80% by volume of said microporous film.

This method for manufacturing the microporous film is particularly suitable because films with a desired thickness may be produced. The typical thickness of the microporous film produced according to the method mentioned in this invention is less than 150 µm. The preferable thickness is between 15 and 60 µm, more preferably from 15 to 55 µm. Microporous film of less than 15 µm is believed to have a weak physical properties, especially its tear strength properties. On the other hand, said film having a thickness of higher than 150 µm is also not favourable since it is too thick to be readily adhered on our standard support.

Stretching of the ply may be performed in the conventional way by using various well-known stretching equipment. The ply is at least stretched in the longitudinal stretching direction above its elastic limit. The stretch ratio is usually chosen in the range of 1.5 to 10. Preferably the stretch ratio is in the range of 2 to 6. As used herein, the stretched ratio is determined by the formula:

$$S = L_2/L_1$$

where S is the stretch ratio, $L_1$ is the distance between two reference points located on the intermediate ply and on a line parallel to the stretching direction, and $L_2$ is the distance between the same two reference points located on the stretched microporous film.

The temperature at which stretching is accomplished may vary widely. In most cases, the film surface temperatures during stretching are in the range of from 20°C to 220°C. The preferred temperatures are in the range of 40°C to 165°C and ideally between 55°C and 130°C.

The microporous film may optionally be stretched in the transversal direction after accomplishing the longitudinal stretching. The transversal stretch ratio lies generally between 1.1 and 10. The preferable transversal stretching ratio is between 1.1 and 4. Generally the degree of the stretching is such that the required pore volume and the claimed pore size distribution are obtained.

According to the present invention, the pores should constitute from 30 to 80 percent by volume of the microporous film. The pore volume was measured as follows:

Of a micro porous film sample (size 10 x 10 cm) the volume (V) and weight (W1) was determined. Subsequently the sample was immersed for one minute in water, to which 50 mmol/l SDBS surfactant was added. After one minute the surplus of water was removed from the top- and backside surface by means of a wiper and the weight of the sample was measured immediately (W2). The pore volume was calculated as follows:

$$\text{pore volume} = ((W2-W1) / V) \times 100$$

When the porosity of the microporous film is lower than 25 percent, the capacity of the film to absorb the ink jet solvent generally becomes too low; in particular the drying speed of the ink jet medium of such films could become unacceptably low. On the other hand, porosity of higher than 80 percent are difficult to produce by the above mentioned production method and usually a microporous film with such a high porosity has a low tensile strength properties.

The amount of filler added to the hydrophobic thermoplastic resin and the suitable filler size depend on the desired properties of the microporous film including tear strength, water vapour transmission rate, stretch ability and pore volume. It is believed that the pore volume created in the microporous film is difficult to obtain in a sufficient manner with an amount of filler of less than about 30 percent by weight. The more we are able to increase the filler amount, the more suitable the film will be due to the increase of the pore volume and porosity. In the present invention the strength of the microporous film is mainly determined by the layer or layers having a low amount of fillers; low meaning < 50% by weight, lower than 30% is generally not beneficial, as using this amount may negatively influence the water penetration speed, but pigment weights between 30 and 50 % by weight can be used depending on the properties one likes to achieve. The increase of porosity is mainly achieved by the at least one layer having a filler amount >50% by weight. In a proper formulation a filler amount as high as 100% by weight can be achieved. Depending on the intended properties filler amounts between 50 and 100% by weight can be used In the previous art it is necessary to coat the inorganic filler with fatty acids such as fatty acid ester, silicone oil or silanes, in order to reach the desired loading degree. Using our present invention, that is not necessary anymore.

The average particle size of the filler is generally less than 40 μm and is preferably in the range of 0.5 and 10 μm. The desired pore distribution of the microporous film may be obtained by using fillers which have a single average particle size or a mixture of at least two different average particle sizes. According to this invention, a better balance between the pore size distribution, the porosity and the glossiness of the microporous film can be achieved by utilising at least two fillers, wherein the ratio of the biggest average particle size over the smallest average particle size is at least 1.5. Especially for a thicker microporous film, where we need to use a larger particle size in order to have sufficient porosity and volume of interconnecting pores while maintaining the high gloss value, it will be very beneficial to use two or more fillers having different average particle sizes.

The hydrophobic thermoplastic resins suitable for manufacturing the microporous film are available in a huge number and kinds. In general, any substantially water-insoluble thermoplastic polymers, that can be extruded, calendered, pressed or rolled into a ply, film, sheet, strip or web may be used.

The polymer may be a single polymer or a mixture of polymers. The polymers may be homopolymers, copolymers, random polymers, block copolymers, atactic polymers, isotactic polymers, syndiotactic polymers, linear polymers, or branched polymers. When mixtures of polymers are used, the mixtures may be homogeneous, or it may comprise two or more polymeric phases. Examples of classes of suitable thermoplastic polymers include the polyolefins, poly(halo-substituted polyolefins), polyesters, polyamides, polyurethanes, polyureas, poly(vinyl-halides), poly (vinylidene halides), polystyrenes, poly(vinyl esters), polycarbonates, polyethers, polysulfides, polyimides, polysilanes, polysiloxanes, polycaprolactames, polyacrylates, and polymethacrylates. Examples of suitable thermoplastic polymers include high density polyethylene, low density polyethylene, ultra high molecular weight polyethylene, polypropylene (atactic, isotactic or syndiotic), poly(vinyl chloride), polytetrafluoroethylene, copolymers of ethylene and alpha-olefins, copolymers of ethylene and acrylic acids, copolymers of ethylene and methacrylic acids, copolymers of ethylene and vinyl acetate, copolymers of propylene and alpha-olefins, poly(vinylidene chloride), copolymers of vinylidene chloride and vinyl acetate, copolymers of vinylidene chloride and vinyl chloride, copolymers of ethylene and propylene, copolymers of ethylene and butene, poly(vinyl acetate), poly(omega-aminoundecanoic acid), poly(methyl methacrylate), poly(hexamethylene adipamide), poly(epsilon-caprolactam).

The preferred thermoplastics are polyolefins comprising polyethylene, polypropylene, co-polymers of ethylene and alpha-olefines, co-polymers of ethylene and acrylic acids, copolymers of ethylene and methacrylic acids, copolymers of ethylene and vinyl acetate and the mixture thereof.

Using simultaneous or consecutive extrusion, the composition of the hydrophobic thermoplastic resins in the various layers can be different. It was found, however, that it is beneficial to have the same thermoplast or thermoplast mixtures used in the various layers of the extruded ply for economic reasons and for water absorption reasons. In case we want to optimise on stiffness for example it can be advantageous to use different kind of resins in the various layers. Also for the fillers it is beneficial to use the same kind of fillers in the various extruded layers, although it might be advantageous in some cases to deviate from this principle. By using the melt extrusion method we can also vary the thickness of the various layers. It is obvious, that there is a limit of the percentage of the high filled layers compared with the lower filled layers as at a too high percentage (> 80%) we enter than again in an area where we will have web breaks during stretching. A higher percentage of the high filled layers will increase the drying speed in the ink jet application. Typically a ratio of 3 to 1 by weight of high filled to low filled layers will give very good drying properties.

The fillers can be selected either from the groups of organic fillers and inorganic fillers. The examples of organic fillers include wood particles, pulp particles, cellulose type particles, polymer particles such as Teflon™ particles and Kevlar™ particles, nylon particles dispersed in polypropylene, polybutylene terephthalate particles in polypropylene, and polypropylene dispersed in polyethylene terephthalate. The important characteristics of these organic fillers are it size and the shape of the particles. Spheres are preferred and they can be hollow or solid.

Examples of the inorganic fillers are one ore more ingredients selected from the group consisting of calcium carbonate, clay, silica, titanium dioxide, talc, clay, kaolin, magnesium sulphate, barium sulphate, calcium sulphate, aluminium hydroxide, magnesium hydroxide, calcium hydroxide, magnesium oxide, zinc oxide and zeolite. The preferred fillers are selected from calcium carbonate, silica, barium sulphate, titanium dioxide or mixture thereof.

It has been found during our experiments that the surface tension and the amount of ink solution injected during printing are not the same for all brands of the ink jet ink. Depending on the type and the brand name of the ink jet ink, it is possible to further improve the solvent absorption speed of the microporous film of the present invention. The addition of a hydrophilic component into the mixture of the hydrophobic thermoplastic resin and the filler prior to the extrusion coating has resulted in a remarkable improvement of the solvent absorption speed. The hydrophilic component is an additive compounded with the polymer composition for the purpose of rendering the surface of the microporous film and the pore surface hydrophilic. The hydrophilic component is a surfactant selected from the group of sorbitan fatty acid ester such as sorbitan monooleate, sorbitan monolaurate, sorbitan monostearate and sorbitan tristearate; polyoxyalkylene sorbitan fatty acid ester such as polyoxyethylene sorbitan trioleate; glycerine fatty acid ester such as glycerine monooleate and glycerine monostearate; polyglycerin fatty acid ester such as diglycerin monooletae, digelycerinsesquilaurate, tetraglycerin monooleate and decaglycerin monolaurate; polyoxyalkylene alkyl ether such as polyoxyethylene lauryl ether; polyoxyalkylene fatty acid ester such as polyethylene monolaurate, polyoxyethylene trioleate; polyoxyethylene alkyl mercaptan such as polyoxyethylene dodecyl thioether; polyoxyethylene alkyl phenol such as polyoxyethylene nonyl phenyl ether; pentaerythritol fatty acid ester such as pentaerythritol monostearate; saccharose fatty acid ester such as saccharose laurate; polyoxyethylene fatty acid amide such as polyoxyethylene oleamide; aliphatic amine such as lauryl diethanolamine; and fatty acid amide such as oleamide. Particularly preferred are glycerin monooleate and sorbitan ester, since these surfactants are almost not extracted from the microporous film, when said film is in contact with water.

According to the present invention, the microporous film may be adhered to a support through an adhesive layer. The adhesive material can be of any materials that have good properties for adhering the microporous film on the support, and which is permeable for gas and liquid. Examples of such materials are starch, gelatine, gums arabic, pectin, albumin, polyurethanes, polyacrylates and agar-agar. The adhesive layer may comprise further of inorganic particles such as silica, alumina, $CaCO_3$, or the mixture thereof. In order to enhance the adhesion properties, the microporous film and/or the support may be treated with corona treatment, plasma treatment or flame treatment prior to applying the adhesive layer.

The absorption speed of solvent of the microporous film that has been adhered to the support as described above, can be further increased by making it more hydrophilic by coating an aqueous solution containing water, gelatin and a surfactant as described in WO-A-02/53391, which is incorporated herein by reference. Said microporous film may either comprise a hydrophobic thermoplastic resin and filler or it may comprise a hydrophobic thermoplastic resin, filler and a hydrophilic component. The same better water absorbance is obtained when impregnating the microporous film before it is applied to a support.

The support which is used in this invention, can optionally be coated on the back side with a polymer matrix comprises of at least a polyolefin resin and an anti-static agent. Furthermore, the support is selected from a paper, a photographic base paper, a synthetic paper or a plastic film.

Examples of the material of the plastic film are polyolefins such as polyethylene and polypropylene, vinyl copolymers such as polyvinyl acetate, polyvinyl chloride and polystyrene, polyamide such as 6,6-nylon and 6-nylon, polyesters such as polyethylene terephtalate, polyethylene-2 and 6-naphtalate and polycarbonate, and cellulose acetates such as cellulose triacetate and cellulose diacetate. The microporous film of the present invention might have two different surfaces, depending on the formulation used. The number of layers we can use is in fact only limited by technical reasons. It is possible to use 2,3,4 or 5 layers extruded consecutively or simultaneously, in which high and low filler loaded layers are used in a symmetrical or non symmetrical way. From production point of view simultaneous extrusion, which is known as coextrusion is preferred. If the microporous film is not build up symmetrically we can use both sides of the film to act as the ink-receiving layer. Both have advantages. If we use the lower filled layer as the surface layer gloss is enhanced and if we use the higher filled layer as the ink-receiving layer, the absorption speed is increased.

Additionally an ink-receiving layer may be coated on the surface of the microporous film, which has been adhered onto the support. The ink-receiving layer is characterised by the hygroscopic properties of said layer and its high ability to fix the image with a precise dot size and to provide good image stability. The said ink receiving layer comprises binders, fine porous pigments particles selected from the groups of aluminium oxides such as boehmite and pseudo-boehmite and those of silica such as silica gel, fumed silica and precipitated silica, and optionally various known additives, including surfactants, mordant, etc.

Alternatively, an ink-receiving layer comprising water-soluble binder is also suitable to be coated on the surface of the microprous film. In this case the ink-receiving layer does not substantially contain pigments. This ink receiving formulation provides better protection against the dye fading of the printed image than the earlier formulations.

Optionally the ink-receiving layer may comprise other materials to improve the whiteness and the glossiness appearances of the ink jet medium. The suitable materials for the binder can be selected from gelatine or one of its modified products, poly (vinyl alcohol), NBR latex, cellulose derivatives, quaternary ammonium salt polymers, poly vinyl pyrrolidone, poly-ethylene-oxide, poly acrylic acid, polyurethane, or the combination thereof.

In order to further improve the gloss appearance and other additional properties, we may coat an over-coating layer on top of the ink-receiving layer. This layer may comprise cellulose derivatives such as hydroxymethyl cellulose and hydroxyethyl cellulose, poly-vinyl alcohol or gelatine in combination with a suitable cross-linking agent. The over coating layer is non-porous but is ink permeable.

## EXAMPLES

The present invention will be explained in detail by the following non-limiting examples:

### Example 1

A microporous film with layer structure A-B was produced according to the following steps:

Layer structure:

- Layer A was a polyolefin LLDPE comprising 70wt.% $CaCO_3$ (average particle size of 2 $\mu$m) and 1 % sorbitan ester as a surfactant.
- Layer B comprised 50% wt.% $CaCO_3$ (average particle size of 2 $\mu$m); 49 wt.% polyolefin; and 1% sorbitan ester as a surfactant.

The films were subjected to the following processing steps:

- The two layered film was co-extruded at 220°C to form a ply.
- The ply was cooled down.
- Stretching was performed at 70C with a stretch ratio of 5.

- Thickness is 72 μm.

The thickness of the film was determined by the Lorentzen& Wettre model SE051D2. The measured film thickness was 72 μm.

## Example 2

The microporous film from Example 1 was corona treated on the side B that was laminated to a support of 166 g/m² base paper. The film and the support were laminated by means of an adhesive solution with the following composition: lime bone gelatin solution in water (20wt %) and silica slurry (grade name sylojet 703A; 18 wt.% silica gel dispersed in water)(supplier: Grace Davison) were mixed in the ratio 36/74.
Total dry weight of the slurry was 18.7 wt.%.

## Example 3

The laminated microporous film from Example 2 was coated with an ink-receiving layer comprising an inorganic pigment ( HP 14 an aluminium hydrate of boehmite structure purchased from Sasol, Germany) and a binder (Polyvinyl alcohol Z320 purchased from Nippon Gohsei Europe GmbH). Mixing ratio between the PVA and HP14 was 1 : 14.
The substrate from Example 2 was corona treated before the ink receiving layer coating by means of K hand coater Bar 5 and dried at 50°C in an oven.

## Example 4

A micro porous film was prepared as mentioned in Example 1 but with a thickness of 36 μm.

## Example 5

The microporous film from Example 4 was corona treated on the side B that was laminated to a support of 166 g/m² base paper. The film and the support were laminated by means of an adhesive (Gelatin/silica mixture).

## Example 6

The laminated microporous film from Example 5 was coated with an ink-receiving layer comprising an inorganic pigment (HP14 an aluminium hydrate of a boehmite structure purchased from Sasol, Germany) and a binder (Polyvinyl alcohol Z320 purchased from Nippon Gohsei Europe Gmbh). Mixing ratio between the PVA and HP14 was 1 : 14.
The substrate from Example 5 was corona treated before the ink receiving layer coating by means of K hand coater Bar 5 and dried at 50°C in an oven.

## Example 7

A micro porous film was prepared as mentioned in Example 4 but with a thickness of 43 μm.

## Example 8

The microporous film from Example 7 was corona treated on the side B that was laminated to a support of 166 g/m² base paper. The film and the support were laminated by means of an adhesive (Gelatin/silica mixture).

## Example 9

The laminated microporous film from Example 8 was coated with an ink receiving layer comprising an inorganic pigment ( HP14 an aluminium hydrate of a boehmite structure purchased from Sasol, Germany) and a binder (Polyvinyl alcohol Z320 purchased from Nippon Gohsei Europe Gmbh). Mixing ratio between the PVA and HP14 was 1 : 14.
The substrate from Example 8 was corona treated before prior to the ink receiving layer coating by means of K hand coater Bar 5 and dried at 50°C in an oven.

## Comparative Example 1

A microporous film, which was produced at the same conditions as described in Example 1, except that the microporous film had a monolayer (layer C) structure with the following recipe:

- Layer C comprises 50% wt.% $CaCO_3$ with an average particle size of 2 µm. Other components are 49 wt.% polyolefin and 1% tri glycerol ester as a surfactant.

The thickness of the microporous film after stretching was 32 µm.

## Comparative Example 2

The microporous film from comparative Example 1 was corona treated on the side, which was laminated to a support of 166 $g/m^2$ base paper. The film and the support were laminated by means of an adhesive (Gelatin/silica mixture).

## Comparative Example 3

The laminated microporous film from comparative Example 2 was coated with an ink receiving layer comprising an inorganic pigment ( HP 14 an aluminium hydrate of a boehmite structure purchased from Sasol, Germany) and a binder (Polyvinyl alcohol Z320 purchased from Nippon Gohsei Europe Gmbh). Mixing ratio between the PVA and HP14 was 1 : 14.
The substrate from Example 2 was corona treated before the ink receiving layer coating by means of K hand coater Bar 5 and dried at 50°C in an oven.

## Comparative Example 4

A micro porous film as mentioned in comparative Example 1 but with a thickness of 53 µm.

## Comparative Example 5

The microporous film from comparative Example 4 was corona treated on the side, which was laminated to a support of 166 $g/m^2$ base paper. The film and the support were laminated by means of an adhesive (Gelatin/silica mixture).

## Comparative Example 6

The laminated microporous film from Example 5 was coated with an ink receiving layer comprising an inorganic pigment (HP14 an aluminium hydrate of a boehmite structure purchased from Sasol, Germany) and a binder (Polyvinyl alcohol Z320 purchased from Nippon Gohsei Europe Gmbh. Mixing ratio between the PVA and HP14 was 1 : 14.
The substrate from Example 5 was corona treated before the ink receiving layer coating by means of K hand coater Bar 5 and dried at 50°C in an oven.
For printing of the examples, an Epson 890 ink jet printer was used. The image which was printed comprises a test patch with various colors and color densities.
The drying speed of the prints was determined by putting 10 seconds after finishing of the printing, an A4 size sheet of plain copying paper supreme print'n copy (80 $g/m^2$)( supplier: Proost en Brandt) on the test print and applying a weight of 500gram to the A4 sheet. After one minute the ply was removed. The drying speed was qualitatively judged by checking the amount of ink, which was transferred to the plain copy paper. If almost no ink was transferred we judged the drying to be very good (4) and if very much ink was transferred to the plain copy paper, even in the area's where not much ink was printed in the original this drying was judged to be bad(1). In a similar way we could identify good (3) and not so good(2) drying.

Table 1.

| Physical properties of the microporous films | | | | | | |
|---|---|---|---|---|---|---|
| Example | Thickness (μm) | Basis weight (g/m²) | Thickness ratio[1] | Air permeability (sec)[2] | Ink penetration time (sec)[3] | Void volume |
| 1 | 72 | 58.3 | 3 | 68 | 2.2 | 42 |
| 4 | 36 | 30.0 | 1 | 40 | 0.5 | 44 |
| 7 | 43 | 33.7 | 3 | 27 | 0.5 | 46 |
| Comp. 1 | 32 | 27.5 | Mono layer | 161 | 3.4 | 31 |
| Comp. 4 | 53 | 46.2 | Mono layer | 428 | 13.9 | 23 |

1) Layer A/Layer B

2) Air permeability was measured by means of the Bekk smoothness tester (supplier: Messmer Büchel) Settings: Volume 1/10, pressure interval 50.66 - 29.33 kPa.

3) Ink penetration time was measured by putting an ink droplet of 0.2 μl Epson 770 black ink (MJIC7) on one side of the porous film. The penetration time is the time (seconds) that the ink needs to reach the opposite side of the film. This was recorded visually.

Table 2.

| Print evaluations of the ink-jet sheets containing a paper base, a microporous film and an ink-receiving layer. | |
|---|---|
| Example | Drying speed of ink jet print |
| 3 | 4 |
| 6 | 3 |
| 9 | 4 |
| Comp. 3 | 1 |
| Comp. 6 | 1 |
| Ranking: 1 is slow drying; 4 is quick drying | |

From Table 1 and 2 we can conclude, that the microporous sheet of the present invention has very good air permeability and ink penetration time. When used in an ink jet application, the films according to the invention give very good drying speed.

**Claims**

1. A microporous film comprising a multilayer of hydrophobic thermoplastic resins in which at least one of the layers comprises at least one filler in an amount of > 50% and in which at least one of the remaining layers contains at least one filler in the amount of < 50%.

2. A microporous film according to claim 1 in which at least the outer layer of said multilayer of hydrophobic resins contains a hydrophilic component.

3. A microporous film according to claim 1 and/or 2 in which the multilayer of hydrophobic resins is made hydrophilic by impregnating the film with a hydrophilic solvent and drying.

4. The microporous film according to any of the previous claims, wherein said microporous film is obtainable by a method comprising the successive steps of preparing at least one mixture consisting of a hydrophobic thermoplastic resin, containing at least one polymer and a mineral and/or organic filler in an amount > 50% and optionally a hydrophilic component and preparing at least one mixture consisting of a hydrophobic thermoplastic resin, containing at least one polymer and at least one mineral and/or organic filler in an amount < 50% and optionally a hydrophilic component; extruding at least both mixtures consecutively or simultaneously at elevated temperatures to form a ply thereof, pre-stretching the ply, cooling said ply until the ply is solidified and stretching said cooled ply to form said microporous film.

5. The microporous film according claim 4, wherein said microporous film is obtainable by a method comprising the successive steps of:

- preparing at least one mixture consisting of a hydrophobic thermoplastic resin, containing at least one polymer and at least one mineral and/or organic filler in an amount > 50% and optionally a hydrophilic component and preparing at least one mixture consisting of a hydrophobic thermoplastic resin , containing at least one polymer and at least one mineral and/or organic filler in an amount < 50% and optionally a hydrophilic component ; extruding at least both mixtures consecutively or simultaneously at elevated temperatures to form a ply thereof;
- pre-stretching the ply with a drag roll;
- cooling and solidifying the pre-stretched ply using the drag roll;
- drawing the solidified ply at sufficient temperature to form the micro-porous film, whereby:

  - the cooling of the pre-stretched melting ply by the drag roll is partial and limited in a controlled manner at a temperature within the range required for its drawing; and
  - the drawing of the ply, brought to the required temperature for drawing through partial cooling is carried out by traction at the time of its tangential separation from the drag roll, the said roll acting as take-up roller for drawing.

6. The microporous film according to claim 1 where $1.5 < S < 10$ and preferably $2 < S < 6$; S being the stretch ratio $= L_2 / L_1$; $L_1$ is the distance between two reference points located on the melt extruded ply on a line parallel to the stretching direction, and $L_2$ is the distance between the same two reference points located on the stretched microporous film.

7. The microporous film according to any of the previous claims, wherein said microporous film has a thickness of less than 150 μm.

8. The microporous film according to claim 7 having a thickness of from 15-100 μm, preferably from 15 to 60 micrometers.

9. The microporous film according to any of the previous claims where the ratio of the high filled layer versus the low filled layer is > 1 and < 4.

10. The microporous film according to any of the previous claims, wherein the total void volume of said microporous film is at least 25% of said microporous film.

11. The microporous film according to any of the previous claims, wherein the hydrophobic thermoplastic resin comprises a polyolefin selected from the group consisting of polyethylene; polypropylene; co-polymers of ethylene and alpha-olefins; co-polymers of ethylene and acrylic acids, copolymers of ethylene and methacrylic acids, copolymers of ethylene and vinyl acetate and mixtures thereof.

12. The microporous film according to claim 1, wherein said filler has an average particle size of less than 40 μm, preferably between 0.5 μm and 10 μm.

13. The microporous film according to claim 12, wherein said filler is selected from the group consisting of calcium carbonate, barium sulphate, silica, titanium dioxide and mixtures thereof.

14. The microporous film according to claim 2 in which the hydrophilic component is selected from the group of consisting of sorbitan fatty acid ester, polyoxyalkylene sorbitan fatty acid ester, glycerin fatty acid ester, polyglycerin fatty acid ester, polyoxyalkylene ether, or the mixtures thereof.

15. The microporous film according to claim 14, wherein the amount of said hydrophilic component is less than 10 wt. % of the total weight of said microporous film.

16. The microporous film according to claim 3 where the hydrophilic solvent comprises gelatin and a surfactant selected from the anionic surfactants comprising alkyl aryl sulphonates, alkyl sulphate ester, sulphosuccinic acid alkyl ester, and aliphatic sulphonates, and from the cationic surfactants comprising quaternary ammonium compounds.

17. The microporous film according to claims 16, wherein the dry amount of said surfactant is between 0 and 1.5 gram/$m^2$.

18. Ink jet recording medium comprising a support and the microporous film according to any of the previous claims.

19. Medium according to claim 18 in which the medium is made more hydrophilic by impregnating the medium with a hydrophilic solvent and drying.

20. Medium according to claim 19 where the hydrophilic solvent comprises gelatin and a surfactant selected from the anionic surfactants comprising alkyl aryl sulphonates, alkyl sulphate ester, sulphosuccinic acid alkyl ester, and aliphatic sulphonates, and from the cationic surfactants comprising quaternary ammonium compounds.

21. Medium according to claims 20, wherein the dry amount of said surfactant is between 0 and 1.5 gram/$m^2$.

22. Medium according to according to claims 18-21, wherein said support is a paper, a photographic base paper, a synthetic paper or a film substrate.

23. Medium according to according to claim22, wherein said support is laminated on the opposite side of where the microporous film is adhered with a polymer matrix comprises at least a polyolefin resin.

24. Medium according claims 18-23, wherein an ink-receiving layer, which comprises binder, is coated on the surface of said microporous film.

25. Medium according to claim 24, wherein said ink receiving layer further comprising inorganic particles.

26. Medium according to claim 25, wherein said inorganic particles in the ink receiving layer comprising silica, boehmite, pseudo-boehmite or combinations thereof.

27. Medium according to claim 24, wherein said binder in the ink receiving layer comprises gelatins, polyvinyl alcohol, polyvinyl pyrolidone, poly-ethylene-oxide, poly acrylic acid, polyurethane, cellulose derivatives or the mixtures thereof.

28. Medium according to claims 18-27, further comprising an ink-permeable protective layer on top of said ink receiving layer.

29. Medium according to claim 28, wherein said protective layer comprises hydroxypropyl methyl cellulose, polyvinyl alcohol or gelatin or combinations thereof.

30. Method of producing the medium of claim 18 in which the microporous film of claim 1-17 is adhered on a support through an adhesive layer.

31. Method of claim 30 in which the adhesive layer comprises at least a binder like starch, gelatine, gums arabic, pectin, polyurethane's, polyacrylates, albumin and agar-agar and optionally comprises further inorganic particles such as silica, alumina, $CaCO_3$, or the mixture thereof.

32. Method according to claim 30 and 31 in which the microporous film and/or the support are treated with corona treatment, plasma treatment or flame treatment prior to applying the adhesive layer.

33. A method of forming a permanent, precise ink jet image comprising the step of: providing an ink jet recording medium as is described in any of the claims 18-32, and introducing ink jet ink into contact with the medium in the pattern of a desired image.

**European Patent Office**

# EUROPEAN SEARCH REPORT

Application Number

EP 03 07 6460

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 075 050 A (TAKASHI MASANORI ET AL) 21 February 1978 (1978-02-21) <br><br> * column 3, line 38 - line 39; claims 1-4; figure 11; tables I-VII * <br> --- | 1,2, 7-13,18, 30 | C08J5/18 <br> B32B27/20 <br> B32B31/00 <br> B41M5/00 |
| X | US 4 318 950 A (TAKASHI MASANORI ET AL) 9 March 1982 (1982-03-09) <br><br> * claims 1-11; figure 11; tables I-VII * <br> --- | 1,2, 7-13,18, 30 | |
| X | EP 0 744 284 A (OJI YUKA SYNT PAPER CO LTD) 27 November 1996 (1996-11-27) <br><br> * page 2, line 14 - line 50; figures 1-3; example 1 * <br> * page 3, line 2 - page 5, line 7 * <br> * page 6, column 26-40 * <br> --- | 1,4-13, 18, 22-25, 30,33 | |
| X | GB 2 296 216 A (KIMBERLY CLARK CO) 26 June 1996 (1996-06-26) <br><br> * examples 1-5 * <br> --- | 1,4-13, 18, 22-25, 30,33 | TECHNICAL FIELDS SEARCHED (Int.Cl.7) <br><br> B32B <br> B41M <br> C08J |
| D,X | WO 02 053391 A (FUJI PHOTO FILM B V ;DE VRIES LEKE (NL); VAN DER VELDEN-SCHUERMANS) 11 July 2002 (2002-07-11) <br> * claims 1-39; figures 1-3; examples 1-11 * <br> ----- | 1-3,10, 14-17, 19-21, 27-29 | |

The present search report has been drawn up for all claims

| Place of search | Date of completion of the search | Examiner |
|---|---|---|
| MUNICH | 31 October 2003 | olde Scheper, B |

## ANNEX TO THE EUROPEAN SEARCH REPORT
## ON EUROPEAN PATENT APPLICATION NO.

EP 03 07 6460

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2003

| Patent document cited in search report | | Publication date | Patent family member(s) | | Publication date |
|---|---|---|---|---|---|
| US 4075050 | A | 21-02-1978 | DE | 1914972 A1 | 16-10-1969 |
| | | | FR | 2004775 A1 | 28-11-1969 |
| | | | GB | 1268823 A | 29-03-1972 |
| | | | US | 3799828 A | 26-03-1974 |
| | | | US | 3841943 A | 15-10-1974 |
| | | | US | 4318950 A | 09-03-1982 |
| US 4318950 | A | 09-03-1982 | DE | 1914972 A1 | 16-10-1969 |
| | | | FR | 2004775 A1 | 28-11-1969 |
| | | | GB | 1268823 A | 29-03-1972 |
| | | | US | 3799828 A | 26-03-1974 |
| | | | US | 3841943 A | 15-10-1974 |
| | | | US | 4075050 A | 21-02-1978 |
| EP 0744284 | A | 27-11-1996 | JP | 8310161 A | 26-11-1996 |
| | | | CN | 1144746 A ,B | 12-03-1997 |
| | | | DE | 69600952 D1 | 17-12-1998 |
| | | | DE | 69600952 T2 | 15-04-1999 |
| | | | EP | 0744284 A2 | 27-11-1996 |
| | | | US | 5629072 A | 13-05-1997 |
| GB 2296216 | A | 26-06-1996 | FR | 2786726 A1 | 09-06-2000 |
| | | | AU | 698621 B2 | 05-11-1998 |
| | | | AU | 4603596 A | 10-07-1996 |
| | | | BR | 9510475 A | 26-05-1998 |
| | | | CA | 2208535 A1 | 27-06-1996 |
| | | | CN | 1175226 A ,B | 04-03-1998 |
| | | | EG | 20808 A | 29-03-2000 |
| | | | EP | 0799128 A2 | 08-10-1997 |
| | | | FR | 2728786 A1 | 05-07-1996 |
| | | | PL | 320886 A1 | 10-11-1997 |
| | | | TR | 960585 A2 | 21-07-1996 |
| | | | WO | 9619346 A2 | 27-06-1996 |
| | | | US | 6075179 A | 13-06-2000 |
| | | | ZA | 9510604 A | 03-07-1996 |
| | | | RU | 2147521 C1 | 20-04-2000 |
| | | | US | 6309736 B1 | 30-10-2001 |
| WO 02053391 | A | 11-07-2002 | EP | 1345780 A1 | 24-09-2003 |
| | | | WO | 02053391 A1 | 11-07-2002 |

EPO FORM P0459

For more details about this annex : see Official Journal of the European Patent Office, No. 12/82